# EUROPEAN PATENT APPLICATION

(11) **EP 3 695 957 A1**
(43) Date of publication of application: **19.08.2020**
(21) Application number: 19156982.1
(22) Date of filing: 13.02.2019
(51) Int. Cl.: B29C 70/68, B29C 64/106, B33Y 80/00

(54) **METHOD FOR OPERATING AN APPARATUS FOR ADDITIVELY MANUFACTURING THREE-DIMENSIONAL OBJECTS**

(71) Applicant: Concept Laser GmbH, 96215 Lichtenfels (DE)
(72) Inventor: Vierling, Christoph, 96237 Ebersdorf (DE)
(74) Representative: Hafner & Kohl PartmbB

(57) **Abstract**

Method for operating an apparatus (1) for additively manufacturing three-dimensional objects (2) by means of successive layerwise selective irradiation and consolidation of layers of a build material (3) which can be consolidated by means of an energy source, comprising the steps:
- Arranging at least one prefabricated product (12) in a build plane (11),
- Layerwise applying build material (3) in a manufacturing region (16) that is delimited by at least a first side (14) of the prefabricated product (12) or the build plane (11), particularly bottom sides, and at least one second side (15) of the prefabricated product (12), particularly a side wall of the prefabricated product (12)
- Selective consolidation of at least one consolidation zone in the manufacturing region (16) dependent on a geometry of an object (2) to be additively built on the prefabricated product (12)
- Repeating the layerwise application and consolidation until the object (2) is finished

## Description

The invention relates to a method for operating an apparatus for additively manufacturing three-dimensional objects by means of successive layerwise selective irradiation and consolidation of layers of a build material which can be consolidated by means of an energy source.

Apparatuses for additively manufacturing three-dimensional objects and methods for operating the same are generally known from prior art. Usually build material is consolidated by layerwise selective irradiation and consolidation by means of an energy source, which build material is layerwise applied in a process chamber of the apparatus, which layers of build material are successively irradiated. Hence, it is possible to layerwise build three-dimensional objects from the build material. Also, so-called "hybrid" processes are known from prior art involving the additive manufacturing of three-dimensional objects onto prefabricated products, e.g. building an additive manufactured structure on top of a prefabricated object.

As, in particular using powder bed based additive manufacturing methods, the application of build material is performed via an application unit, for example involving an application element that conveys build material and distributes build material in a build plane, known manufacturing processes are limited to manufacturing additive structures on a top surface of a prefabricated object. For example, the prefabricated object can be integrated into the powder bed, wherein the additive structure can be formed on top of the uppermost surface of the prefabricated object. Hence, it is not possible to arbitrarily manufacture additive structures onto prefabricated objects. Usually, if additive structures have to be manufactured on multiple sides of the prefabricated object, the additive structures have to be added to the prefabricated object in different additive manufacturing processes, wherein the prefabricated object is rotated between the different additive manufacturing processes in that the surface to which the additive structure is added is arranged as top surface.

It is an object of the present invention to provide an improved method for operating an apparatus for additively manufacturing three-dimensional objects, in particular a method that allows for manufacturing three-dimensional objects on multiple (arbitrary) sides of the prefabricated product.

The object is inventively achieved by a method according to claim 1. Advantageous embodiments of the invention are subject to the dependent claims.

The method described herein is a method for operating an apparatus for additively manufacturing three-dimensional objects, e.g. technical components, by means of successive selective layerwise consolidation of layers of a powdered build material ("build material") which can be consolidated by means of an energy source, e.g. an energy beam, in particular a laser beam or an electron beam. A respective build material can be a metal, ceramic or polymer powder. A respective energy beam can be a laser beam or an electron beam. A respective apparatus can be an apparatus in which an application of build material and a consolidation of build material is performed separately, such as a selective laser sintering apparatus, a selective laser melting apparatus or a selective electron beam melting apparatus, for instance. Alternatively, the successive layerwise selective consolidation of build material may be performed via at least one binding material. The binding material may be applied with a corresponding application unit and, for example, irradiated with a suitable energy source, e.g. a UV light source.

The apparatus may comprise a number of functional units which are used during its operation. Exemplary functional units are a process chamber in which the additive manufacturing process is performed, an irradiation unit which is adapted to selectively irradiate a build material layer disposed in a build plane, e.g. disposed on a build plate in the process chamber, with at least one energy beam, and a stream generating unit which is adapted to generate a gaseous fluid stream at least partly streaming across the build plane, e.g. through the process chamber, with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

As described before, the invention relates to a method for operating an apparatus for additively manufacturing three-dimensional objects. According to the inventive method, at least one prefabricated product is arranged in the build plane, in particular on a build plate arranged in a process chamber. Subsequently, build material is layerwise applied in a manufacturing region. The manufacturing region is delimited by at least a first side of the prefabricated product or the build plane, particularly bottom sides, and at least one second side of the prefabricated product, particularly a sidewall of the product.

In other words, the manufacturing region defines the region in which build material is layerwise applied and (selectively) irradiated and consolidated, for instance. The manufacturing region is delimited by two sides, for example a first side of the build plane or the prefabricated product and a second side of the prefabricated product, for example a sidewall of the prefabricated product. Hence, it is possible to additively build an object or add an object to the prefabricated product in the manufacturing region that is delimited by the first side and the second side. In particular, it is possible to additively add the object on a side of the prefabricated product other than the top surface. The object does not have to contact the second side or the first side, as the object is only manufactured within the manufacturing region. It is particularly possible that the object is built on a layer of unconsolidated build material inside the manufacturing region not contacting the first side and/or the second side. The term "build plane" may refer to any arbitrary plane or surface on which build material may be applied. For instance, a build plate, e.g. a metal plate, may be provided on which build material may be applied. It is also possible that part of a floor, e.g. the floor of a plant, is used as build plane.

Hence, it is possible to selectively consolidate at least one consolidation zone in the manufacturing region dependent on a geometry of the object that is to be additively built on the prefabricated product. Thus, the consolidation zones define areas in which the applied build material is consolidated, e.g. via irradiation. The consolidation zone depends on the geometry of the object that is to be additively built on the prefabricated product, for example the corresponding (intended) cross-section of the actual layer of the object. The layerwise application and consolidation of the build material is repeated, in particular until the object is finished, i.e. after the last layer has been applied and consolidated to form the three-dimensional object in the additive manufacturing process. Therefore, it is possible to add an object to the prefabricated product, in particular different or the same objects at different sides of the prefabricated product. Of course, it is possible to add different objects in different manufacturing regions.

According to an embodiment of the inventive method, at least one wall element is built that delimits the manufacturing region. Hence, it is possible that the manufacturing region that is delimited by at least a first side and at least a second side via the prefabricated product (or the build plate) is further delimited by at least one wall element that can be additively built in the additive manufacturing process. The wall element can, for example, enclose the manufacturing region in that build material can be applied in the manufacturing region, wherein the build material is held in place by the at least one wall element. Of course, the number of wall elements can be chosen arbitrarily. The at least one wall element may, for example, delimit the manufacturing region in that a volume is enclosed via the at least one first side, the at least one second side and the wall element in that the additive manufacturing process can be performed in the manufacturing region. The wall element itself can, for example, also be additively built in a layerwise manner together with the object or it is possible to separately build a wall element, for example in advance to applying build material in the manufacturing region. The wall element may further be considered as part of the object, for example an outer wall of the object or it is possible to consider the wall element as "support structure" that can be removed after the additive manufacturing process is finished.

The inventive method may further be improved in that the manufacturing region is delimited by the at least one second side of the product and at least one third side of the product. Hence, the at least one second side and the at least one third side of the prefabricated product enclose a volume that can be used as manufacturing region. For example, the second side of the product and the third side of the product may be formed as parts of the product, such as facing sides of the product, wherein it is also possible to have at least one wall element additively built to further delimit the manufacturing region. For example, the prefabricated product may be U-shaped, wherein the first side of the product may form the bottom side, and the second side and the third side of the product may form essentially vertical portions of the U-shape facing each other.

According to another embodiment of the inventive method, at least one wall element may be built connecting two prefabricated products and/or two portions of the same prefabricated product, in particular the at least one second side and the at least one third side of the prefabricated product. As described before, the at least one wall element may be built in the manufacturing region or enclosing the manufacturing region, respectively. For example, if two different prefabricated products are arranged in the process chamber, for example two parts of a superordinate product that is to be manufactured, in particular completed via the at least one additively built object, it is possible to connect the two prefabricated products provided in the process chamber via the at least one wall element. Particularly, two wall elements may be used to connect the two prefabricated products, wherein the two wall elements extend in different sections of the two prefabricated products, e.g. connecting two facing sides of the two prefabricated products.

It is also possible that, as described before, the prefabricated product comprises at least a second side and a third side that delimit the manufacturing region, wherein the second side and the third side can be connected via the at least one wall element, particularly enclosing the manufacturing region. In other words, the manufacturing region is enclosed by at least the second side and the third side of the prefabricated product and at least one, particularly two, wall elements connecting the second side and the third side of the prefabricated product. Hence, the resulting superordinate product may comprise at least one prefabricated product and the object that is additively built onto the prefabricated product, for example connected to the side of the prefabricated product. It is also possible that two prefabricated products and the additively built object are connected to form the superordinate product.

According to another embodiment of the inventive method, the prefabricated product may comprise a closed contour enclosing a hollow portion, particularly a ring and/or a cuboid and/or a prism-like and/or cone-like contour. The prefabricated product according to this embodiment may comprise a closed contour that encloses a hollow portion. The hollow portion that is enclosed by the closed contour therefore, delimits the manufacturing region in which an object can be additively built, in particular connected with the prefabricated product. For example, the prefabricated product may be built as ring or hollow cylinder, wherein in the interior of the prefabricated product at least one additively built object can be manufactured. Hence, the superordinate product that comprises the additively built object and the prefabricated product can be completed via the additive manufacturing process by adding the additively built object to the prefabricated product, in particular to the interior that is enclosed via the closed contour.

For example, it is possible to complete the superordinate product by adding filigree structures that have to be additively built to the prefabricated product. Advantageously, the prefabricated product can be built using conventional manufacturing processes, such as drilling or milling, whereas the filigree structures can be additively built and thus, the overall manufacturing process can be performed more efficiently, in particular faster, compared with manufacturing the whole superordinate product via the additive manufacturing process.

The inventive method may further be improved in that a gas stream can be generated, particularly locally, in the manufacturing region. For example, a print head may be used that is adapted to generate a gas stream in the manufacturing region, apply build material in the manufacturing region and (selectively) irradiate the build material in the manufacturing region. In other words, the additive manufacturing process can be delimited to (exclusively performed in) the manufacturing region, wherein the generation of the gas stream can be performed more efficiently, as the gas stream has only to be generated inside the manufacturing region.

Besides, the invention relates to an apparatus for additively manufacturing three-dimensional objects by means of successive layerwise selective irradiation and consolidation of layers of a build material which can be consolidated by means of an energy source, which apparatus comprises a process chamber in which the additive manufacturing process is performed, wherein the apparatus is adapted to manufacture at least one object in at least one manufacturing region on a prefabricated product that is arranged or arrangeable in the process chamber, wherein the manufacturing region is delimited on a first side, in particular the bottom side, by a build plate or a first side of the product and on at least a second side via at least one second side of the prefabricated product.

Hence, the inventive apparatus may be used to complete a superordinate product by inserting a prefabricated product into the process chamber of the apparatus and additively manufacturing an object in the manufacturing region, which is delimited by a first side and a second side, for example a first side of the build plate or the prefabricated product and a second side of the prefabricated product. The term prefabricated product may relate to any arbitrary product or object that can be arranged in the process chamber of the additive manufacturing apparatus and to which the additively built object can be connected or can be built on a surface of the prefabricated product. The term "build plate" relates to any arbitrary surface on which build material can be applied in the additive manufacturing process, for example a carrier plate of a carrier unit of the additive manufacturing apparatus, such as a powder table.

The inventive apparatus may further be improved by an application unit that is adapted to layerwise apply build material in the at least one manufacturing region, in particular solely in the manufacturing region. The application unit may therefore, be used to apply build material in the manufacturing region. By applying build material solely in the manufacturing region, the amount of build material that is necessary to perform the additive manufacturing process can significantly be reduced. Further, the time required for performing the application process can also be reduced. Hence, it is possible to perform the additive manufacturing process more efficiently.

According to another embodiment of the inventive apparatus, the manufacturing region may be at least partially enclosed via the at least one side, in particular the at least one second side and at least one third side of the product. Thus, the manufacturing region may, as described before, be enclosed by at least one prefabricated product, for example the inner circumference of a ring-shaped prefabricated product. Alternatively, two sides of a single prefabricated product, such as a U-shaped product, may delimit the manufacturing region. It is also possible that two prefabricated products are arranged in the process chamber, wherein at least one side of each of the prefabricated products delimits the manufacturing region.

The inventive apparatus may further comprise a print head that comprises irradiation consolidation device and/or comprise a stream generating unit and/or an application unit. Hence, the print head may be an assembly of different units or different technical components of the additive manufacturing apparatus which can be moved to the manufacturing region to perform the additive manufacturing process, for instance.

The consolidation device may comprise an irradiation unit adapted to guide an energy beam onto a build plane. Thus, build material can be arranged in the build plane, wherein the energy beam can be guided across the build plane to selectively irradiate and thereby, consolidate the build material. Alternatively or additionally, the consolidation device may comprise a radiation source, in particular a UV source, and a binder material application unit adapted to apply binder matieral onto the build plane, wherein the radiation source is adapted to emit radiation for consolidating the binder material and the build material. Hence, build material may be applied in the build plane, wherein the binder material can selectively be applied in regions that have to be consolidated. By (uniformly) irradiating the applied binder material (and build material) the binder material is consolidated and thereby, the build material is consolidated.

To move the print head, the apparatus may comprise a moving unit that is adapted to move the manufacturing region relative to the print head. Of course, it is possible to move either the print head relative to the manufacturing region or to move the manufacturing region, wherein it is also possible to move both the manufacturing region and the print head.

The moving unit may, for example, comprise a gantry, a movable build plate, a multi-axis robot carrying at least one part of an irradiation unit or a hexapod that is adapted to move the manufacturing region via multiple moving elements, in particular six moving elements. Hence, it is possible to move the manufacturing region in six degrees of freedom, for example three translatory and three rotatory degrees of freedom. Advantageously, it is possible to build the moving unit comparatively compact, in particular compared to other moving units known from prior art.

Of course, all features, details and advantages described with respect to the inventive method are fully transferable to the inventive apparatus and vice versa. Self-evidently, the inventive method may be performed on the inventive apparatus.

Exemplary embodiments of the invention are described with reference to the Fig. The Fig. are schematic diagrams, wherein
- Fig. 1: shows a first embodiment of an inventive method performed on an inventive apparatus in side view;
- Fig. 2: shows a second embodiment of the inventive method performed on the inventive apparatus in side view;
- Fig. 3: shows the second embodiment in top view;
- Fig. 4: shows a third embodiment of the inventive method performed on the inventive apparatus in side view;
- Fig. 5: shows the third embodiment in top view; and
- Fig. 6: shows a fourth embodiment of an inventive method performed on an inventive apparatus in side view.

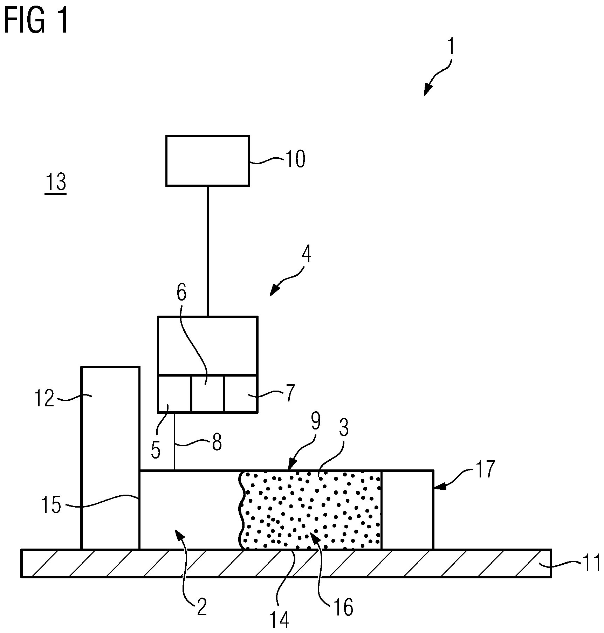

Fig. 1 shows an apparatus 1 for additively manufacturing three-dimensional objects 2 by means of successive layerwise selective irradiation and consolidation of layers of a build material 3 which can be consolidated by means of an energy source. In this exemplary embodiment (optional) the apparatus 1 comprises a print head 4 with an irradiation unit 5, a stream generating unit 6 and an application unit 7. The irradiation unit 5 is adapted to generate and guide an energy beam 8 onto a build area 9, i.e. a plane in which build material 3 is arranged to be selectively irradiated via the energy beam 8. The stream generating unit 6 is adapted to generate a stream of (inert) gas, in particular over the build area 9. The stream of gas can, inter alia, be charged with residues generated in the additive manufacturing process, such as build material particles, soot, smoke or smolder, for instance.

The build material application unit 7 is adapted to layerwise apply build material 3 in the build plane 9. The print head 4 is coupled with a moving unit 10 that is adapted to move the print head 4 relative to a build plane 11, for example a build plate, in particular a metal plate onto which the build material 3 can be applied. As can further be derived from Fig. 1, a prefabricated product 12 is arranged on the build plane 11, i.e. in a process chamber 13 (optional), which is the chamber in which the additive manufacturing process may be performed. Of course, it is also possible to perform an additive manufacturing process without a process chamber 13, e.g. when non-reactive build material is used. Fig. 1 further shows that a first side 14 of the build plane 11 and a second side 15 of the prefabricated product 12 delimit a manufacturing region 16 in which the additive manufacturing process is performed. In other words, build material 3 can be applied in the manufacturing region 16, which build material 3 can be selectively irradiated via the energy beam 8 to form or build the three-dimensional object 2, which is connected to the prefabricated product 12 at the second side 15 of the prefabricated product 12. The prefabricated product 12 can, inter alia, be built as metal cuboid or any other body of arbitrary material and geometry.

The term "build area" may especially refer to the area in which an actual layer of build material is applied to be consolidated, whereas the term "build plane" may refer to the plane that carries the non-consolidated build material 3 and the object 2.

The manufacturing region 16 is further delimited by a wall element 17 which delimits, particularly encloses, the manufacturing region 16. For example, the wall element 17 is connected to the prefabricated product 12 and delimits the manufacturing region 16 in that the object 2 can be connected to the prefabricated product 12 and can be additively manufactured in the additive manufacturing process. Of course, multiple wall elements 17 can be built in the additive manufacturing process to delimit the manufacturing region 16. Further, the wall elements 17 can be built simultaneously with the object 2, for example in a layerwise successive manner. It is also possible to build the wall elements 17 separately, in particular in advance to the additive manufacturing process in which the three-dimensional object 2 is manufactured.

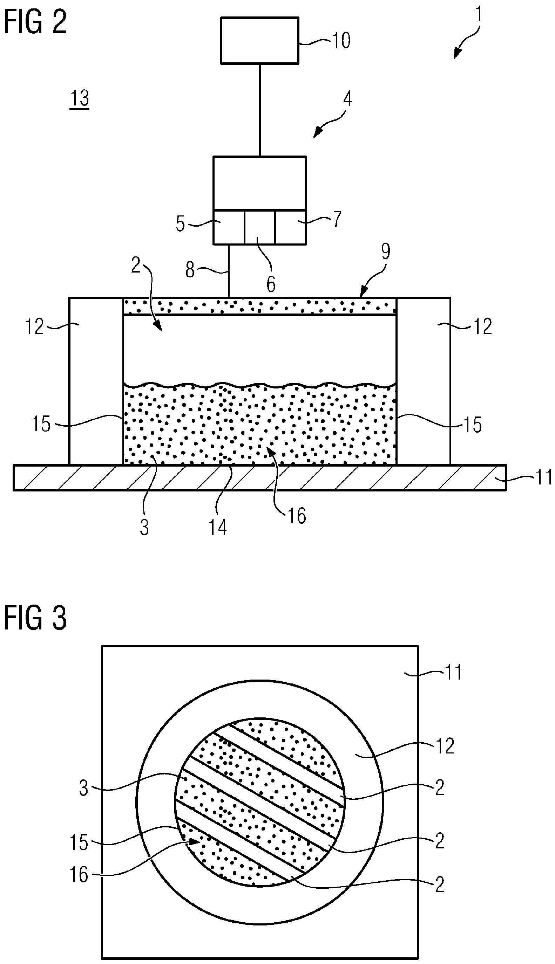

Fig. 2 shows a second embodiment of the inventive method performed on the inventive apparatus 1 in side view. Hence, same numerals are used for same parts. In the second embodiment, a ring-shaped or cylinder-shaped prefabricated product 12, as can be derived from the top view depicted in Fig. 3, is used in the additive manufacturing process. In this exemplary embodiment the prefabricated product 12 is ring-shaped and arranged on the build plane 11 in the process chamber 13 of the apparatus 1. Hence, three-dimensional objects 2 can be additively built inside the manufacturing region 16 which is delimited by the first side 14 of the build plane 11 and the second side 15 of the prefabricated product 12. In this embodiment, the second side 15 of the prefabricated product 12 is the inner circumference of the ring-shaped prefabricated product 12.

In other words, it is possible to manufacture the prefabricated product 12 via a conventional manufacturing process, such as milling or drilling or the like. The filigree objects 2 that are to be manufactured in the interior of the prefabricated product 12 cannot be manufactured via conventional manufacturing processes. Hence, the objects 2 are additively manufactured in the manufacturing region 16 which is a delimited by the second side 15 of the prefabricated product 12 and the first side 14 of the build plane 11. Hence, build material 3 can be applied via the application unit 7 in the manufacturing region 16 and can subsequently be irradiated via the energy beam 8 generated and guided via the irradiation unit 5. Simultaneously, a stream of process gas can be generated via the stream generating unit 6, as described before.

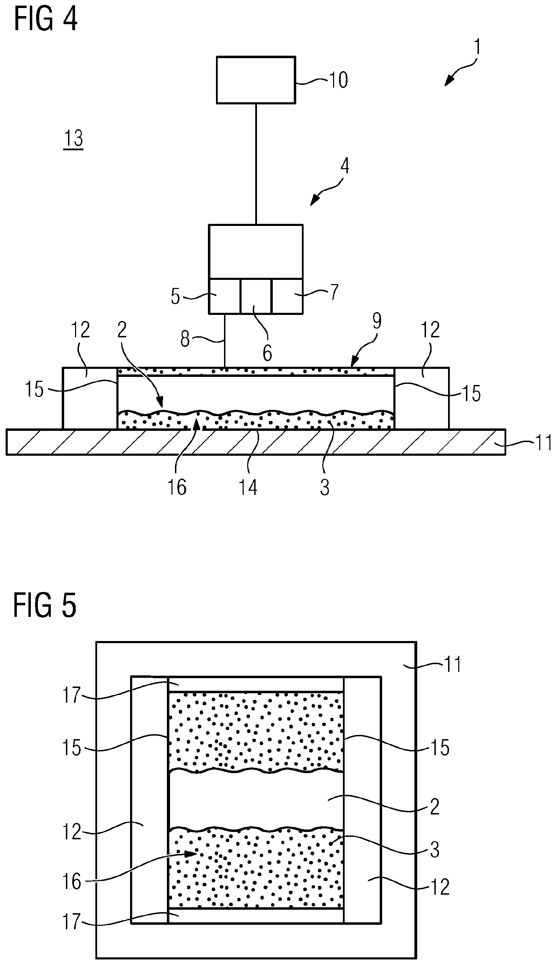

Figs. 4 and 5 show a third embodiment of the invention in side view (Fig. 4) and top view (Fig. 5), respectively. In this exemplary embodiment, two prefabricated products 12, which are, for example, built as metal cuboids are arranged on the build plane 11 in the process chamber 13 of the additive manufacturing apparatus 1. Hence, the manufacturing region 16 in which the additive manufacturing process is performed is delimited by the first side 14 of the build plane 11, and a second side 15 of each of the prefabricated products 12. In other words, the prefabricated products 12 are arranged in that the second sides of 15 of the prefabricated products 12 face each other and delimit the manufacturing region 16 arranged between the two prefabricated products 12. As can be derived from Fig. 5, the manufacturing region 16 is further delimited by two wall elements 17 that connect the two prefabricated products 12. In this exemplary embodiment each of the wall elements 17 connects the second sides 15 of the two prefabricated products 12. Of course, the shape of the prefabricated products 12, the wall elements 17 and the object 2, as well as the manufacturing region 16 is merely exemplary and can be chosen arbitrarily.

Hence, the third embodiment allows for generating an additively manufactured three-dimensional object 2 that connects the two prefabricated products 12, wherein each of the prefabricated products 12 may be manufactured with conventional manufacturing processes, such as milling, drilling or the like. The wall elements 17 may be considered as part of the superordinate object that is formed by the prefabricated products 12 and the additively built object 2 or the wall elements 17 may be considered as support structures that can be removed after the manufacturing process is finished. Of course, the second side 15 of the prefabricated product 12 can also be deemed as third side.

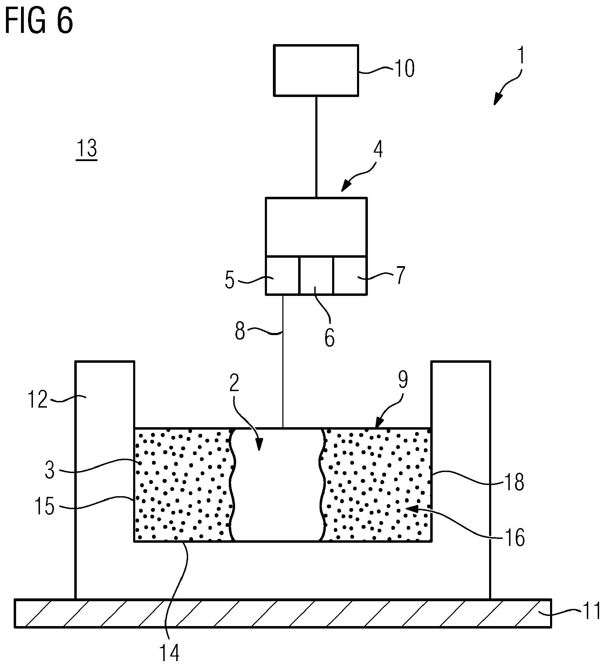

Fig. 6 shows a fourth embodiment of the invention, wherein the prefabricated product 12 comprises U-shape. Thus, the prefabricated product 12, which is placed on the build plane 11 of the a additive manufacturing apparatus 1 in the process chamber 13, comprises a first side 14, a second side 15 and a third side 18 that delimit the manufacturing region 16 in which build material 3 is applied to be irradiated via the energy beam 8 generated via the irradiation unit 5 to form the three-dimensional object 2 in the manufacturing region 16. In other words, it is possible to layerwise apply build material 3 in the manufacturing region 16, which is delimited by at least the first side 14, second side 15 and third side 18 of the prefabricated product 12.

Of course, it is possible that the prefabricated product 12 comprises further sides that delimit the manufacturing region 16, for example two additional sides perpendicular to the second side 15 and the third side 18 and therefore, essentially arranged parallel to the drawing plane. It is also possible that the open spaces of the prefabricated product 12 are (at least temporarily) closed via wall elements 17, as indicated in Fig. 5.

Thus, it is possible to layerwise apply build material 3 via the application unit 7 of the print head 4 in the manufacturing region 16 and thereby, additively build the three-dimensional object 2 via selective irradiation via the energy beam 8 that is generated and guided via the irradiation unit 5. Further, the stream generating unit 6 can be used to generate a stream of process gas locally limited in the manufacturing region 16.

Self-evidently, all details, features and advantages described with respect to the individual embodiments can arbitrarily be exchanged, transferred and combined. In each embodiment more than one manufacturing region 16 can be provided, for example by additively manufacturing multiple objects 2 to at least one of the prefabricated products 12, in particular on different sides of the prefabricated products 12. The region of the build plane 9 in which build material 3 is selectively irradiated and thereby consolidated can also be deemed as "consolidation zone". Further, the inventive method may be performed on the inventive apparatus 1, as described before.

## Claims

1. Method for operating an apparatus (1) for additively manufacturing three-dimensional objects (2) by means of successive layerwise selective irradiation and consolidation of layers of a build material (3) which can be consolidated by means of an energy source, **characterized by**
- Arranging at least one prefabricated product (12) in a build plane (11), particularly in a process chamber (13),
- Layerwise applying build material (3) in a manufacturing region (16) that is delimited by at least a first side (14) of the prefabricated product (12) or the build plate (11), particularly bottom sides, and at least one second side (15) of the prefabricated product (12), particularly a side wall of the prefabricated product (12)
- Selective consolidation of at least one consolidation zone in the manufacturing region (16) dependent on a geometry of an object (2) to be additively built on the prefabricated product (12)
- Repeating the layerwise application and consolidation.

2. Method according to claim 1, **characterized by** building at least one wall element (17) that delimits the manufacturing region (16).

3. Method according to claim 1 or 2, **characterized in that** the manufacturing region (16) is delimited by the at least one second side (15) of the prefabricated product (12) and at least one third side (18) of the prefabricated product (12).

4. Method according to one of the preceding claims, **characterized by** connecting the at least one wall element (17) to the prefabricated product (12).

5. Method according to claim 3 or 4, **characterized by** building at least one wall element (17) connecting two prefabricated products (12) and/or two portions of the same prefabricated product (12), in particular the at least one second side (15) and the at least one third side (18) of the prefabricated product (12).

6. Method according to one of the preceding claims, **characterized in that** the prefabricated product (12) comprises a closed contour enclosing a hollow portion, particularly a ring and/or a cuboid and/or a prism-like and/or cone-like contour.

7. Method according to one of the preceding claims, **characterized by** generating a gas stream, particularly locally, in the manufacturing region (16).

8. Apparatus (1) for additively manufacturing three-dimensional objects (2) by means of successive layerwise selective irradiation and consolidation of layers of a build material (3) which can be consolidated by means of an energy source, which apparatus (1) comprises a process chamber (13) in which the additive manufacturing process is performed, **characterized in that** the apparatus (1) is adapted to manufacture at least one object (2) in at least one manufacturing region (16) on a prefabricated product (12) that is arranged or arrangeable in the process chamber (13), wherein the manufacturing region (16) is delimited on a first side (14), in particular the bottom side, by a build plate (11) or a first side (14) of the prefabricated product (12) and on at least a second side (15) via at least one second side (15) of the prefabricated product (12).

9. Apparatus according to claim 8, **characterized by** an application unit (7) that is adapted to layerwise apply build material (3) in the at least one manufacturing region (16), in particular solely in the manufacturing region (16).

10. Apparatus according to claim 8 or 9, **characterized in that** the manufacturing region (16) is at least partially enclosed via the at least one side (14, 15), in particular the at least one second side (15) and the at least one third side (18) of the product.

11. Apparatus according to one of the claims 8 - 10, **characterized by** a print head (4) that comprises irradiation unita consolidation device and/or a stream generating unit (6) and/or an application unit (7).

12. Apparatus according to one of the claims 11, **characterized in that** the consolidation device comprises an irradiation unit (5) adapted to guide an energy beam (8) onto a build plane (9).

13. Apparatus according to one of the claims 11 or 12, **characterized in that** the consolidation device comprises a radiation source, in particular a UV source, and a binder material application unit adapted to apply binder matieral onto a build plane (9), wherein the radiation source is adapted to emit radiation for consolidating the binder material and the build material.

14. Apparatus according to one of the claims 8 - 13, **characterized by** a moving unit (10) that is adapted to move the manufacturing region (16) relative to the print head (4).

15. Apparatus according to one of the claims 8 - 14, **characterized in that** the moving unit (10) comprises a gantry, a movable build plate, a multi-axis robot carrying at least one part of an irradiation unit or a hexapod.
